# EUROPÄISCHE PATENTSCHRIFT

(11) **EP 1 227 001 B1**
(45) Veröffentlichungstag und Bekanntmachung des Hinweises auf die Patenterteilung: **03.10.2007**
(21) Anmeldenummer: 02000505.4
(22) Anmeldetag: 09.01.2002
(51) Int. Cl.: B60N 3/10

(54) **Getränkebehälter**
Beverage container
Récipient pour boisson

(30) Priorität: 30.01.2001 DE 20101540 U
(43) Veröffentlichungstag der Anmeldung: 31.07.2002
(73) Patentinhaber: fischerwerke Artur Fischer GmbH & Co. KG, 72178 Waldachtal (DE)
(72) Erfinder: Kaupp, Klaus, 72178 Waldachtal (DE); Bieck, Torsten, 72178 Waldachtal (DE); Greim, Thomas, 72178 Waldachtal (DE); Schierling, Inge, 72290 Lossburg (DE)

(56) Entgegenhaltungen:
- FR-A- 2 758 299
- US-A- 5 671 877

## Beschreibung

Die Erfindung betrifft einen Getränkehalter mit den Merkmalen des Oberbegriffs des Anspruchs 1.

Derartige Getränkehalter sind in einer Vielzahl unterschiedlicher Ausgestaltungen bekannt. Sie sind zum Einbau in einen Kraftwagen oder ein sonstiges Fortbewegungsmittel vorgesehen und dienen dem kippsicheren Halten eines eingestellten Getränkegefäßes. Das Getränkegefäß kann beispielsweise eine Getränkedose, ein Becher, eine Tasse oder dgl. sein. Die bekannten Getränkehalter weisen eine Einstellöffnung zum Einstellen des Getränkegefäßes auf. Zur Anpassung an Getränkegefäße mit unterschiedlichem Durchmesser ist es bekannt, die Getränkehalter mit einem verstellbaren Halteelement auszubilden, das einen Teil der Einstellöffnung bildet und in deren Randbereich angeordnet ist. Das Halteelement weist eine Schwenklagerung auf, mit der es zur Anpassung an die unterschiedlichen Durchmesser der Getränkegefäße in die Einstellöffnung hinein verschwenkbar ist. Durch das Verschwenken des Halteelements ist eine lichte Weite der Einstellöffnung verstellbar. Um das Halteelement in seiner jeweiligen Schwenkstellung zu arretieren ist es bekannt, eine Rasteinrichtung vorzusehen. Die Rasteinrichtung ist so ausgebildet, dass sie durch Ausübung einer ausreichend großen Kraft auf das Halteelement außer Eingriff gelangt und dadurch ein Verschwenken des Halteelements ermöglicht. Die bekannten Rasteinrichtungen haben jedoch den Nachteil, dass sie eine unangenehm hohe Kraft zum außer Eingriff bringen der Rasteinrichtung und Verschwenken des Halteelements erfordern.

Aus der Fr 2758299 ist ein Getränkehalter entsprechend dem Oberbegriff des Anspruchs 1 bekannt.

Der Erfindung liegt die Aufgabe zugrunde, einen Getränkehalter der vorstehend erläuterten Art so auszubilden, dass sein Halteelement ohne großen Kraftaufwand schwenkbar ist.

Diese Aufgabe wird erfindungsgemäß durch die Merkmale des Anspruchs 1 gelöst. Das schwenkbare Halteelement des erfindungsgemäßen Getränkehalters mit den Merkmalen des Anspruchs 1 weist eine Schiebeführung auf, die quer zu der Rasteinrichtung verläuft. Die Rasteinrichtung ist durch Verschieben des Halteelements in der Schiebeführung außer Eingriff bringbar und das Halteelement schwenkbar. Dabei erfolgt das Verschieben des Halteelements in der Schiebeführung und das außer Eingriff bringen der Rasteinrichtung vorzugsweise durch eine zum Verschwenken des Halteelements auf dieses ausgeübte Kraft. Des Weiteren weist der erfindungsgemäße Getränkehalter ein Federelement auf, das das Halteelement in einer Richtung der Schiebeführung beaufschlagt und dadurch die Rasteinrichtung in Eingriff drückt. Zum außer Eingriff bringen der Rasteinrichtung wird also das Halteelement gegen die Kraft des Federelements in der Schiebeführung so weit verschoben, dass die Rasteinrichtung außer Eingriff kommt. Mit Verlauf der Schiebeführung quer zur Rasteinrichtung ist ein Verlauf gemeint, der ein außer Eingriff bringen der Rasteinrichtung durch Verschieben des Halteelements in der Schiebeführung ermöglicht. Die Schiebeführung muss also nicht rechtwinklig oder radial zu einer kreisbogenförmig verlaufenden Rasteinrichtung angeordnet sein. Die Schiebeführung kann auch in einem Winkel zu den genannten Richtungen verlaufen. Auch ist die Schiebeführung nicht zwingend eine Geradführung, sie kann beispielsweise auch als Bogenführung ausgebildet sein.

Das Halteelement bildet einen Teil der Einstellöffnung, es ergänzt die Einstellöffnung in Umfangsrichtung so, dass ein eingestelltes Getränkegefäß in alle Richtungen kippsicher gehalten ist. Die Einstellöffnung braucht in Umfangsrichtung nicht geschlossen zu sein. Es genügt, wenn die Einstellöffnung einschließlich des schwenkbaren Halteelements ein eingestelltes Getränkegefäß an einigen Stellen seines Umfangs so abstützt, dass das Getränkegefäß in allen Richtungen kippsicher gehalten ist.

Die Erfindung hat den Vorteil, dass die Rasteinrichtung, die das schwenk- und verstellbare Halteelement in seiner jeweiligen Schwenkstellung hält, ohne großen Kraftaufwand außer Eingriff bringbar ist, so dass das Halteelement ohne großen Kraftaufwand verschwenkbar und dadurch an den Durchmesser eines in den Getränkehalter eingestellten Getränkegefäßes anpassbar ist. Weiterer Vorteil der Erfindung ist, dass die zum Verschwenken des Halteelements notwendige Kraft vergleichsweise genau festlegbar und auch in einer Großserienproduktion mit geringer Schwankungsbreite einhaltbar ist.

Eine Ausgestaltung der Erfindung sieht einen in einem Langloch einliegenden Zapfen als Schwenklagerung des Halteelements vor. Der Zapfen ist im Langloch dreh- und verschiebbar, so dass die Schwenklagerung zugleich auch die Schiebeführung des Halteelements bildet. Diese Ausgestaltung ermöglicht eine einfache und preisgünstige Ausführung der Erfindung.

Das Halteelement weist bei einer Ausgestaltung der Erfindung die Form eines Haltebügels auf. Insbesondere ist eine der Einstellöffnung des Getränkehalters zugewandte Innenseite des Halteelements konkav.

Eine Schwenkachse des Halteelements kann an sich in beliebigen Richtungen verlaufen. Eine Ausgestaltung der Erfindung sieht einen vertikalen Verlauf der Schwenkachse vor. Mit vertikal ist dabei der Verlauf der Schwenkachse des Getränkehalters in seiner vorgesehenen Einbaulage gemeint.

Die Rasteinrichtung des Halteelements weist bei einer Ausgestaltung der Erfindung eine Zahnstange auf, die bogenförmig um die Schwenklagerung verläuft. Die Zahnstange wirkt mit mindestens einer Rastnase zusammen. Die Rastnasen können eine zweite Zahnstange bilden. Es kann die Zahnstange ortsfest am Getränkehalter und die mindestens eine Rastnase am Halteelement oder umgekehrt die Zahnstange am Halteelement und die mit ihr zusammenwirkende mindestens eine Rastnase ortsfest vorgesehen sein.

Vorzugsweise ist die Zahnstange und/oder die mindestens eine Rastnase federnd ausgebildet, so dass die mindestens eine Rastnase durch eine in Längsrichtung der Zahnstange wirkende Kraft durch eine Schräge von Zahnflanken von Zähnen der Zahnstange außer Eingriff von der Zahnstange bringbar ist. Diese in Längsrichtung der Zahnstange wirkende Kraft wird durch eine auf das Halteelement zum Verschwenken ausgeübte Kraft bewirkt.

Zur federnden Ausbildung kann die Zahnstange und/oder die Rastnase an einer Federlasche angeordnet sein. Dies ermöglicht bei einer Herstellung des Getränkehalters bzw. seines Halteelements aus einem federelastischen Material, beispielsweise aus Kunststoff, eine mit dem Getränkehalter bzw. dem Halteelement einstückige Ausbildung der Zahnstange bzw. der Rastnase.

Die Erfindung wird nachfolgend anhand eines in der Zeichnung dargestellten Ausführungsbeispiels näher erläutert. Die einzige Figur zeigt eine Draufsicht auf einen erfindungsgemäßen Getränkehalter. Die Zeichnung ist als vereinfachte und schematisierte Darstellung zu verstehen.

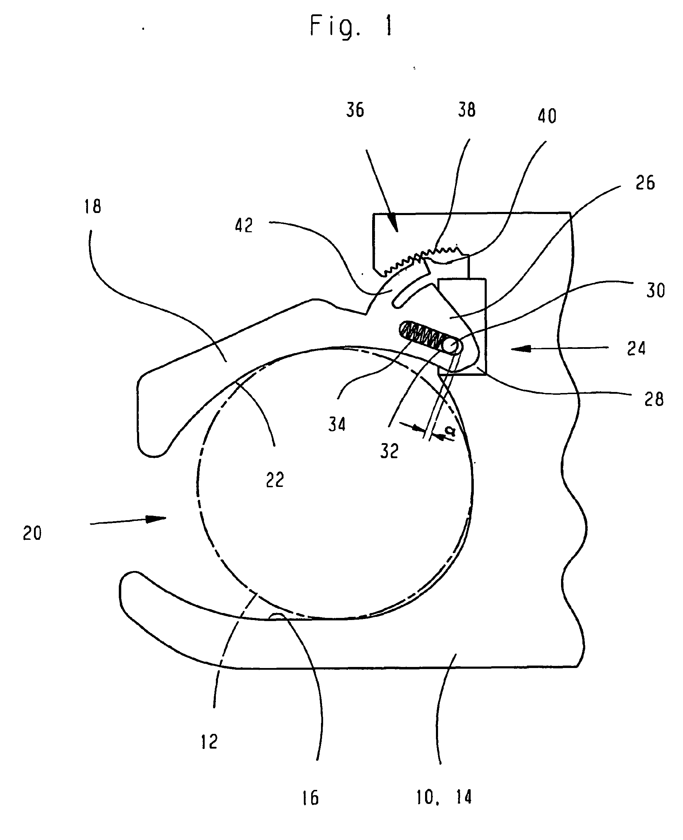

Der in der Zeichnung von oben dargestellte, erfindungsgemäße Getränkehalter 10 ist zum Einbau in einen nicht dargestellten Kraftwagen oder ein sonstiges Fortbewegungsmittel vorgesehen. Er dient zum kippsicheren Halten eines Getränkegefäßes 12, wie beispielsweise einer Getränkedose, das in Figur 1 mit einer strichpunktierten Kreislinie andeutungsweise dargestellt ist. Der Getränkehalter 10 weist ein Grundteil 14 mit einer kreisbogenförmigen Ausnehmung 16 auf, die sich im dargestellten Ausführungsbeispiel über ungefähr 180° in Umfangsrichtung erstreckt. Gemeinsam mit einem Halteelement 18 bildet die Ausnehmung 16 eine Einstellöffnung 20 für das Getränkegefäß 12. Das Halteelement 18 ist als bogenförmiger Haltearm mit einer konkaven, der Einstellöffnung 20 zugewandten Innenseite 22 ausgebildet. Gemeinsam mit der Ausnehmung 16 des Grundteils 14 umfasst das Halteelement 18 ein in die Einstellöffnung 20 eingestelltes Getränkegefäß 12 auf einem Umfangsabschnitt von ungefähr 270°, jedenfalls auf deutlich über 180°, und hält dadurch ein in die Einstellöffnung 20 eingestelltes Getränkegefäß 12 kippsicher im Getränkehalter 10. Das Halteelement 18 ist in einem Randbereich der von ihm selbst und der Ausnehmung 16 des Grundteils 14 gebildeten Einstellöffnung 20 angeordnet, die konkave Innenseite 22 des Halteelements 18 bildet einen Teil der Einstellöffnung 20 bzw. einen Rand der Einstellöffnung 20.

Mit einer noch zu erläuternden Schwenklagerung 24 ist das Halteelement 18 in Bezug auf die Einstellöffnung 20 ein Stück weit nach innen und außen schwenkbar. Durch Schwenken des Halteelements 18 lässt sich eine lichte Weite der Einstellöffnung 20 verändern und an einen Durchmesser des jeweils einzustellenden Getränkegefäßes 12 anpassen. Zur Schwenklagerung ist ein dem Grundteil 14 zugewandtes Ende des Halteelements 18 geschlitzt, so dass das Halteelement 18 an diesem Ende zwei deckungsgleich übereinander liegende Laschen 26 aufweist. Zwischen die beiden Laschen 26 des Halteelements 18 ragt eine Rippe 28, die mit dem Grundteil 14 des Getränkehalters 10 einstückig ist. Von der Rippe 28 des Grundteils 14 stehen zwei zueinander koaxiale Zapfen 30 nach oben und nach unten ab. Die beiden Zapfen 30 liegen in Langlöchern 32 ein, die in den Laschen 26 des Halteelements 18 ausgebildet sind. Die in den Langlöchern 32 einliegenden Zapfen 30 lagern das Halteelement 18 schwenkbar am Grundteil 14, sie bilden die Schwenklagerung 24. Zugleich führen die Zapfen 30 das Halteelement 18 in dessen Langlöchern 32 verschiebbar, sie bilden also auch eine Schiebeführung für das Halteelement 18. Ein Federelement 34 beaufschlagt die Zapfen 30 in Richtung eines dem Grundteil 14 zugewandten Endes des Langlochs 32. Das Federelement 34 ist im dargestellten und beschriebenen Ausführungsbeispiel der Erfindung als in den Langlöchern 32 einliegende Schraubendruckfeder ausgebildet.

Um das Halteelement 18 in seiner jeweiligen Schwenkstellung zu halten weist der erfindungsgemäße Getränkehalter 10 eine Rasteinrichtung 36 auf. Die Rasteinrichtung 36 umfasst eine Zahnstange 38, die im dargestellten und beschriebenen Ausführungsbeispiel der Erfindung einstückig mit dem Grundteil 14 des Getränkehalters 10, also ortsfest ist. Die Zahnstange 38 verläuft kreisbogenförmig um die Zapfen 30 herum. Des Weiteren umfasst die Rasteinrichtung 36 zwei Rastnasen 40, die als Zähne ausgebildet und am Halteelement 18 angeordnet sind. Die Rastelemente 40 können starr am Halteelement 18 angeordnet sein. Im dargestellten Ausführungsbeispiel befinden sich die Rastelemente 40 an einem freien Ende einer vom Halteelement 18 abstehenden Federlasche 42, sie sind also federnd ausgebildet.

In einer eingerasteten Stellung befinden sich die Rastelemente 40 zwischen Zähnen der Zahnstange 38 und halten auf diese Weise das Halteelement 18 in seiner jeweiligen Schwenkstellung. Zum Verschwenken des Halteelements 18 wird eine bzgl. der Einstellöffnung 20 nach innen oder nach außen gerichtete Kraft auf das Halteelement 18 ausgeübt. Diese Kraft bewirkt eine Kraftkomponente in Längsrichtung der Zahnstange 38, die, sofern die ausgeübte Kraft ausreichend groß ist, aufgrund einer Schräge von Zahnflanken der Zähne der Zahnstange 38 und der Rastelemente 40 die Rastelemente 40 außer Eingriff von der Zahnstange 38 bringt und dadurch das Verschwenken des Halteelements 18 ermöglicht. Eine solche, entrastete Stellung, in der die Rastnasen 40 außer Eingriff von der Zahnstange 38 sind, ist in Figur 1 dargestellt. Die Rastelemente 40 stehen dabei auf Zahnspitzen von Zähnen der Zahnstange 38 auf. Die Federlasche 42 ermöglicht aufgrund ihrer Federelastizität das außer Eingriff bringen der Rastelemente 40 von der Zahnstange 38.

Wird zum Verschwenken des Halteelements 18 in beschriebener Weise eine nach innen oder außen gerichtete Kraft auf das Halteelement 18 ausgeübt, bewirkt diese eine Kraftkomponente in Längsrichtung des Langlochs 32 in den Laschen 26 an dem dem Grundteil 14 zugewandten Ende des Halteelements 18. Diese Kraftkomponente drückt wie in der Zeichnung dargestellt die Zapfen 30 gegen die Kraft des Federelements 34 um einen mit a bezeichneten Weg vom Ende der Langlöcher 32 ab. Auch diese Verschiebung des Halteelements 18 auf den Zapfen 30 ermöglicht das außer Eingriff bringen der Rastnasen 40 von der Zahnstange 38. Durch die Schiebeführung des Halteelements 18 mit den Langlöchern 32 auf den Zapfen 30 des Grundteils 14 wird das Entrasten der Rasteinrichtung 36 und damit das Verschwenken des Halteelements 18 zur Anpassung an den Durchmesser eines in den Getränkehalter 10 einzustellenden Getränkegefäßes 12 erleichtert. Durch die Schiebeführung des Halteelements 18 am Grundteil 14 ist es grundsätzlich möglich, die Rastnasen 40 nicht federnd, sondern ohne die Federlasche 42 starr am Halteelement 18 vorzusehen.

## Patentansprüche

1. Getränkehalter (10), mit einer Einstellöffnung (20) zum Einstellen eines Getränkegefäßes (12), mit einem verstellbaren Halteelement (18), das in einem Randbereich der Einstellöffnung (20) angeordnet ist und das eine Schwenklagerung (24) aufweist, durch die es zur Anpassung an unterschiedliche Durchmesser von Getränkegefäßen in die Einstellöffnung (20) hinein verschwenkbar ist, und mit einer Rasteinrichtung (36), die das Halteelement (18) in seiner jeweiligen Schwenkstellung hält, **dadurch gekennzeichnet, dass** das Halteelement (18) eine Schiebeführung (30, 32) aufweist, die quer zur Rasteinrichtung (36) verläuft, so dass durch Verschieben des Halteelements (18) in der Schiebeführung (30, 32) die Rasteinrichtung (36) außer Eingriff bringbar und das Halteelement (18) schwenkbar ist, und dass der Getränkehalter (10) ein Federelement (34) aufweist, das das Halteelement (18) in einer Richtung der Schiebeführung (30, 32) beaufschlagt und das Halteelement (18) in Eingriff mit der Rasteinrichtung (36) drückt.

2. Getränkehalter nach Anspruch 1, **dadurch gekennzeichnet, dass** die Schwenklagerung (24) einen Zapfen (30) und ein Langloch (32), in dem der Zapfen (30) dreh- und verschiebbar einliegt, aufweist, so dass die Schwenklagerung (24) zugleich auch die Schiebeführung bildet.

3. Getränkehalter nach Anspruch 1, **dadurch gekennzeichnet, dass** das Halteelement (18) die Form eines an einer der Einstellöffnung (20) zugewandten Innenseite (22) konkaven Haltearms aufweist.

4. Getränkehalter nach Anspruch 1, **dadurch gekennzeichnet, dass** das Halteelement (18) um eine in etwa vertikale Schwenkachse schwenkbar ist.

5. Getränkehalter nach Anspruch 1, **dadurch gekennzeichnet, dass** die Rasteinrichtung (36) eine bogenförmig um die Schenklagerung (24) verlaufende Zahnstange (38) aufweist, mit der mindestens eine Rastnase (40) zusammenwirkt.

6. Getränkehalter nach Anspruch 5, **dadurch gekennzeichnet, dass** die Zahnstange (38) und/oder die mindestens eine Rastnase (40) federnd ausgebildet ist.

7. Getränkehalter nach Anspruch 6, **dadurch gekennzeichnet, dass** die Zahnstange (38) und/oder die mindestens eine Rastnase (40) an einer Federlasche (42) angeordnet ist.

## Claims

1. Drinks holder (10), having an insertion opening (20) for insertion of a drinks container (12), having an adjustable holding element (18) which is arranged in an edge region of the insertion opening (20) and has a pivot bearing (24) by means of which it is pivotable into the insertion opening (20) for adjustment to different diameters of drinks containers, and having a locking device (36) which maintains the holding element (18) in its particular pivoted position, **characterized in that** the holding element (18) has a means for guiding sliding (30, 32) which extends transversely with respect to the locking device (36), so that by displacement of the holding element (18) in the sliding guide means (30, 32) the locking device (36) is disengageable and the holding element (18) is pivotable, and the drinks holder (10) has a spring element (34) which acts upon the holding element (18) in a direction of the sliding guide means (30, 32) and presses the holding element (18) into engagement with the locking device (36).

2. Drinks holder according to claim 1, **characterized in that** the pivot bearing (24) has a pin (30) and an elongate hole (32) in which the pin (30) is rotatably and displaceably located, so that the pivot bearing (24) at the same time also forms the sliding guide means.

3. Drinks holder according to claim 1, **characterized in that** the holding element (18) takes the form of a holding arm that is concave on the inner side (22) facing the insertion opening (20).

4. Drinks holder according to claim 1, **characterized in that** the holding element (18) is pivotable about an approximately vertical pivot axis.

5. Drinks holder according to claim 1, **characterized in that** the locking device (36) has a toothed rack (38) which extends in a curve around the pivot bearing (24), with which toothed rack at least one locking lug (40) co-operates.

6. Drinks holder according to claim 5, **characterized in that** the toothed rack (38) and/or the at least one locking lug (40) is/are of resilient construction.

7. Drinks holder according to claim 6, **characterized in that** the toothed rack (38) and/or the at least one locking lug (40) is/are arranged on a spring tongue (42).

## Revendications

1. Porte-boisson (10), comprenant une ouverture de réception (20) destinée à recevoir un récipient de boisson (12), un élément de maintien (18) réglable qui est disposé dans une zone périphérique de l'ouverture de réception (20) et qui présente un palier de pivotement (24) lui permettant de pivoter à l'intérieur de l'ouverture de réception (20) pour s'adapter à des récipients de boisson de différents diamètres, comprenant également un dispositif d'enclenchement (36) qui maintient le dispositif de maintien (18) dans sa position de pivotement, **caractérisé en ce que** l'élément de maintien (18) présente un guide coulissant (30, 32) s'étendant transversalement par rapport au dispositif d'enclenchement (36), de sorte qu'en déplaçant l'élément de maintien (18) dans le guide coulissant (30, 32), le dispositif d'enclenchement (36) peut se désengager et l'élément de maintien (18) pivoter, et **en ce que** le porte-boisson (10) présente un ressort (34) qui sollicite l'élément de maintien (18) dans un sens du guide coulissant (30, 32) et pousse l'élément de maintien (18) pour le mettre en prise avec l'élément d'enclenchement (36).

2. Porte-boisson selon la revendication 1, **caractérisé en ce que** le palier de pivotement (24) présente un axe (30) et un trou oblong (32) dans lequel l'axe (30) est logé de manière à pouvoir tourner et coulisser, de sorte que le palier oscillant (24) constitue simultanément le guide coulissant.

3. Porte-boisson selon la revendication 1, **caractérisé en ce que** l'élément de maintien (18) présente la forme d'un bras de maintien concave sur une face intérieure (22) tournée vers l'ouverture de réception (20).

4. Porte-boisson selon la revendication 1, **caractérisé en ce que** l'élément de maintien (18) peut pivoter autour d'un axe de pivotement approximativement vertical.

5. Porte-boisson selon la revendication 1, **caractérisé en ce que** le dispositif d'enclenchement (36) présente une crémaillère (38) s'étendant en arc de cercle autour du palier de pivotement (24), avec laquelle coopère au moins un ergot d'enclenchement (40).

6. Porte-boisson selon la revendication 5, **caractérisé en ce que** la crémaillère (38) et/ou l'au moins un ergot d'enclenchement (40) est réalisé(e) de manière à faire ressort.

7. Porte-boisson selon la revendication 6, **caractérisé en ce que** la crémaillère (38) et/ou l'au moins un ergot d'enclenchement (40) est réalisé(e) sur une languette à ressort (42).
